# EUROPEAN PATENT APPLICATION

(11) **EP 4 645 629 A1**
(43) Date of publication of application: **05.11.2025**
(21) Application number: 22969743.8
(22) Date of filing: 30.12.2022
(51) Int. Cl.: H02J 7/00

(54) **CHARGING DETECTION METHOD AND RELATED DEVICE**

(71) Applicant: Shenzhen Yinwang Intelligent Technologies Co., Ltd., Shenzhen, Guangdong 518110 (CN)
(72) Inventor: JIANG, Siwen, Shenzhen, Guangdong 518129 (CN); XU, Chao, Shenzhen, Guangdong 518129 (CN); KONG, Lingzhao, Shenzhen, Guangdong 518129 (CN); ZHANG, Binbin, Shenzhen, Guangdong 518129 (CN); CHAI, Benben, Shenzhen, Guangdong 518129 (CN); ZHANG, Wuyi, Shenzhen, Guangdong 518129 (CN)
(74) Representative: Pfenning, Meinig & Partner mbB
(86) International application number: PCT/CN2022/143782
(87) International publication number: WO 2024/138596

(57) **Abstract**

A charging detection method and a related device are provided. When an insulation detection voltage is less than or equal to a first threshold determined based on a full-charge voltage of a to-be-charged device, the to-be-charged device obtains a maximum output voltage of a power supply device by exchanging a first message and a second message with the power supply device, and determines, based on the maximum output voltage, whether the power supply device is a high-voltage pile, to further determine whether to use a direct charging manner. This avoids misidentification and charging interruption, and resolves problems of decreased charging efficiency and increased power consumption.

## Description

### TECHNICAL FIELD

Embodiments of this application relate to the field of mechatronics technologies, and in particular, to a charging detection method and a related device.

### BACKGROUND

With continuous development of new energy vehicle technologies, voltage levels of vehicle batteries and charging piles gradually shift to high voltages. However, there is still an inventory of low-voltage charging piles and vehicle batteries.

To meet charging requirements of charging piles with different output voltage levels and different charging scenarios, a vehicle needs to proactively identify an output capability of the charging pile (a maximum output voltage of the charging pile) and select an appropriate charging manner based on the output capability.

However, during identification of the output capability of the charging pile, problems such as misidentification and charging interruption often occur.

### SUMMARY

Embodiments of this application provide a charging detection method, to avoid misidentification and charging interruption, and resolve problems of decreased charging efficiency and increased power consumption. Embodiments of this application further provide a corresponding to-be-charged device, a power supply device, a vehicle, a charging system, an electronic device, a computer-readable storage medium, and the like.

A first aspect of this application provides a charging detection method. The method includes: A to-be-charged device obtains an insulation detection voltage of a power supply device; when the insulation detection voltage is less than or equal to a first threshold, the to-be-charged device sends a first message to the power supply device, where the first threshold is determined based on a full-charge voltage of the to-be-charged device, and the first message includes a current voltage of the to-be-charged device; the to-be-charged device receives a second message from the power supply device in response to the first message, where the second message includes a maximum output voltage of the power supply device; and when the maximum output voltage of the power supply device is greater than or equal to the full-charge voltage of the to-be-charged device, the to-be-charged device requests to be charged in a first charging mode.

In this application, the first charging mode is direct charging (that is, the power supply device directly charges the to-be-charged device at a charge voltage of the power supply device), and a second charging mode is boost charging (that is, the to-be-charged device is charged after the to-be-charged device boosts a charge voltage provided by the power supply device). The to-be-charged device is a rechargeable carrier with a boost charging capability, or may be a power battery module in a vehicle. The power supply device is a direct current charging pile. The to-be-charged device is pre-connected to the power supply device, and a user controls the power supply device to start charging the to-be-charged device.

In this application, in a charging handshake phase, the power supply device initiates insulation detection, the power supply device performs insulation detection on the to-be-charged device, and the to-be-charged device collects the insulation detection voltage of the power supply device to obtain the insulation detection voltage of the power supply device. That is, the power supply device sends the insulation detection voltage to the to-be-charged device, and the to-be-charged device uses a maximum value of collected insulation detection voltages as an insulation detection voltage for subsequent use.

The to-be-charged device in this application includes a battery, the power supply device is specifically configured to charge the battery in the to-be-charged device, and the battery may be specifically a battery pack or a cell.

The first threshold in this application is set based on a full-charge voltage of the battery pack, a rated level specified in a charging pile national standard, a detection error, an offset, and the like.

In this application, when the insulation detection voltage is less than or equal to the first threshold, it is preliminarily determined that the direct current charging pile is a low-voltage charging pile. When the insulation detection voltage is greater than the first threshold, it may be determined that the direct current charging pile is a high-voltage charging pile, and the first charging mode should be used.

From the perspective of a capability of the charging pile or for safety reasons, the insulation detection voltage output by the charging pile is less than a maximum voltage (the full-charge voltage of the battery pack) of the to-be-charged device or the first threshold. Therefore, it may be preliminarily determined that the direct current charging pile is a low-voltage charging pile. In this case, whether the power supply device is actually a low-voltage charging pile needs to be determined by exchanging a message. That is, a charging parameter configuration phase is entered, and the maximum output voltage of the charging pile is obtained by exchanging the first message and the second message. When the maximum output voltage of the power supply device is greater than or equal to the full-charge voltage of the to-be-charged device, it may be determined that the power supply device is a high-voltage charging pile, and the first charging mode should be used. When the maximum output voltage of the power supply device is less than the full-charge voltage of the to-be-charged device, it may be determined that the power supply device is a low-voltage charging pile, and the second charging mode should be used.

According to the first aspect, when the insulation detection voltage is less than or equal to the first threshold determined based on the full-charge voltage of the to-be-charged device, the to-be-charged device obtains the maximum output voltage of the power supply device by exchanging the first message and the second message with the power supply device, and determines, based on the maximum output voltage, whether the power supply device is a high-voltage pile, to further determine whether to use a direct charging manner. This avoids misidentification and charging interruption, and resolves problems of decreased charging efficiency and increased power consumption.

In a possible implementation of the first aspect, the foregoing step in which the to-be-charged device requests to be charged in a first charging mode includes: The to-be-charged device determines whether the power supply device has a reconnection mechanism; the power supply device resends the first message to the to-be-charged device if the power supply device has the reconnection mechanism, where the current voltage of the to-be-charged device is an actual voltage of the to-be-charged device; and the to-be-charged device receives the second message, and requests the power supply device to perform charging in the first charging mode.

In this possible implementation, when the to-be-charged device requests the direct charging manner, the direct charging manner needs to be implemented by using the reconnection mechanism of the power supply device. That is, when the to-be-charged device incorrectly determines that a boost charging manner is used, the direct charging manner may be reused by using the reconnection mechanism, improving implementability of the solution.

In a possible implementation of the first aspect, the foregoing step in which the to-be-charged device determines whether the power supply device has a reconnection mechanism includes: The to-be-charged device sends a third message to the power supply device; and the foregoing step in which the to-be-charged device resends the first message to the power supply device if the power supply device has the reconnection mechanism includes: If the to-be-charged device receives, in a first preset time period, a fourth message from the power supply device in response to the third message, the to-be-charged device resends the first message to the power supply device.

In this possible implementation, the reconnection mechanism is specifically determined by sending the third message. This improves implementability of the solution, limits time of receiving the fourth message, ensures that the power supply device is not shut down due to a long determining phase in a charging procedure, and improves charging experience of the user.

In a possible implementation of the first aspect, the foregoing step in which the to-be-charged device determines whether the power supply device has a reconnection mechanism includes: When the to-be-charged device receives a fifth message in a first preset time period, the to-be-charged device determines whether a fourth message sent by the power supply device is received in the first preset time period; and the foregoing step in which the to-be-charged device resends the first message to the power supply device if the power supply device has the reconnection mechanism includes: If the to-be-charged device receives, in a first preset time period, the fourth message sent by the power supply device, the to-be-charged device resends the first message to the power supply device.

In this possible implementation, the reconnection mechanism may be alternatively determined by the power supply device actively sending the fifth message and the fourth message. This improves implementability of the solution, limits time of receiving the fourth message and the fifth message, ensures that the power supply device is not shut down due to a long determining phase in a charging procedure, and improves charging experience of the user.

In a possible implementation of the first aspect, the method further includes: If the power supply device does not have the reconnection mechanism, the to-be-charged device requests the power supply device to perform charging in a second charging mode; and if the to-be-charged device and the power supply device meet a preset condition, the to-be-charged device requests the power supply device to switch to the first charging mode.

In this possible implementation, when the power supply device does not have the reconnection mechanism, the to-be-charged device may still maintain the boost charging manner, and switch to the direct charging manner in a subsequent process, to ensure that the charging procedure is not stopped, and improve charging experience of the user.

In a possible implementation of the first aspect, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

In this possible implementation, a switching condition for switching to direct charging is limited, to improve a switching success rate, and improve charging experience of the user.

In a possible implementation of the first aspect, the method further includes: The to-be-charged device determines whether switching to the first charging mode succeeds; and if switching to the first charging mode fails, the to-be-charged device requests the power supply device to maintain the second charging mode.

In this possible implementation, after switching to the direct charging manner is requested, whether switching succeeds is further determined, to ensure that the charging procedure is not stopped, and improve charging experience of the user.

In a possible implementation of the first aspect, when the to-be-charged device requests the power supply device to perform charging in the second charging mode, a requested voltage adjustment slope is less than or equal to a fourth threshold, and a requested current adjustment slope is less than or equal to a fifth threshold.

In this possible implementation, requested voltage and current rising slopes are controlled, to effectively reduce a wheel end impact caused by two-phase boost charging (boost charging by using a two-phase winding of a motor).

In a possible implementation of the first aspect, the foregoing step in which the to-be-charged device requests the power supply device to perform charging in a second charging mode includes: The to-be-charged device turns on a fast charge positive relay, and controls a capacitor in a boost box to connect to a boost charge loop, to pre-charge the capacitor in the boost box to a target voltage.

In this possible implementation, when boost charging is used, a battery management system of the to-be-charged device controls to turn on the fast charge positive relay, and controls the capacitor in the boost box to connect to the boost charge loop, to enable a motor control unit of the to-be-charged device to pre-charge the capacitor in the boost box to the target voltage (consistent with a voltage of a battery pack in the sent first message). Then, the battery management system requests the charging pile to work, improving implementability of the solution.

In a possible implementation of the first aspect, the foregoing step in which the to-be-charged device requests to be charged in a first charging mode includes: The to-be-charged device turns on the fast charge positive relay and a fast charge negative relay.

In this possible implementation, when direct charging is used, the battery management system of the to-be-charged device requests to turn on the fast charge positive relay and the fast charge negative relay, and then the battery management system requests the charging pile to work, improving implementability of the solution.

In a possible implementation of the first aspect, the current voltage of the to-be-charged device is a smaller value between a maximum input voltage of the to-be-charged device and an actual voltage of the to-be-charged device.

In this possible implementation, the current voltage of the to-be-charged device in the first message is the smaller value between the maximum input voltage of the to-be-charged device and the actual voltage of the to-be-charged device. This prevents the direct current charging pile from actively stopping power supply when a current voltage of the battery pack is greater than the maximum output voltage of the charging pile, or when the direct current charging pile detects, during the start of charging, that a deviation between a voltage at a moment when the battery is connected and a received BCP message exceeds a specified value.

A second aspect of this application provides a charging detection method. The method includes: A power supply device sends an insulation detection voltage to a to-be-charged device; when the insulation detection voltage is less than or equal to a first threshold, the power supply device receives a first message sent by the to-be-charged device, where the first threshold is determined based on a full-charge voltage of the to-be-charged device, and the first message includes a current voltage of the to-be-charged device; the power supply device sends a second message to the to-be-charged device in response to the first message, where the second message includes a maximum output voltage of the power supply device; and when the maximum output voltage of the power supply device is greater than or equal to the full-charge voltage of the to-be-charged device, the power supply device charges the to-be-charged device in a first charging mode.

In a possible implementation of the second aspect, the foregoing step in which the power supply device charges the to-be-charged device in a first charging mode includes: The power supply device determines whether the power supply device has a reconnection mechanism; the power supply device re-receives the first message sent by the to-be-charged device, if the power supply device has the reconnection mechanism, where the current voltage of the to-be-charged device is an actual voltage of the to-be-charged device; and the power supply device sends the second message to the to-be-charged device, and charges the to-be-charged device in the first charging mode.

In a possible implementation of the second aspect, the foregoing step in which the power supply device determines whether the power supply device has a reconnection mechanism includes: The power supply device receives a third message sent by the to-be-charged device; and the foregoing step in which the power supply device re-receives the first message sent by the to-be-charged device, if the power supply device has the reconnection mechanism includes: If the to-be-charged device receives, in a first preset time period, a fourth message from the power supply device in response to the third message, the power supply device re-receives the first message sent by the to-be-charged device.

In a possible implementation of the second aspect, the foregoing step in which the power supply device determines whether the power supply device has a reconnection mechanism includes: The power supply device sends a fifth message to the to-be-charged device; and the foregoing step in which the power supply device re-receives the first message sent by the to-be-charged device, if the power supply device has the reconnection mechanism includes: If the to-be-charged device receives, in a first preset time period, a fourth message sent by the power supply device, the power supply device re-receives the first message sent by the to-be-charged device.

In a possible implementation of the second aspect, the method further includes: If the power supply device does not have the reconnection mechanism, the power supply device charges the to-be-charged device in a second charging mode; and if the to-be-charged device and the power supply device meet a preset condition, the power supply device switches to the first charging mode to charge the to-be-charged device.

In a possible implementation of the second aspect, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

In a possible implementation of the second aspect, when the power supply device charges the to-be-charged device in the second charging mode, a voltage adjustment slope is less than or equal to the third threshold, and a current adjustment slope is less than or equal to a fourth threshold.

In a possible implementation of the second aspect, the foregoing step in which the power supply device charges the to-be-charged device in a second charging mode includes: The power supply device enables the to-be-charged device to turn on a fast charge positive relay, and enables the to-be-charged device to control a capacitor in a boost box to connect to a boost charge loop, to pre-charge the capacitor in the boost box to the target voltage.

In a possible implementation of the second aspect, the foregoing step in which the power supply device charges the to-be-charged device in a first charging mode includes: The power supply device enables the to-be-charged device to turn on the fast charge positive relay and a fast charge negative relay.

In a possible implementation of the second aspect, the current voltage of the to-be-charged device is a smaller value between a maximum input voltage of the to-be-charged device and an actual voltage of the to-be-charged device.

A third aspect of this application provides a to-be-charged device, configured to perform the method according to the first aspect or any one of the possible implementations of the first aspect. Specifically, the to-be-charged device includes modules or units configured to perform the method according to the first aspect or any one of the possible implementations of the first aspect, for example, an obtaining unit, a sending unit, a receiving unit, and a request unit.

According to the third aspect, the obtaining unit is configured to obtain an insulation detection voltage of a power supply device; the sending unit is configured to: when the insulation detection voltage is less than or equal to a first threshold, send a first message to the power supply device, where the first threshold is determined based on a full-charge voltage of the to-be-charged device, and the first message includes a current voltage of the to-be-charged device; the receiving unit is configured to receive a second message from the power supply device in response to the first message, where the second message includes a maximum output voltage of the power supply device; and the request unit is configured to: when the maximum output voltage of the power supply device is greater than or equal to the full-charge voltage of the to-be-charged device, request to be charged in a first charging mode.

In a possible implementation of the third aspect, the request unit is specifically configured to: determine whether the power supply device has a reconnection mechanism, resend the first message to the power supply device if the power supply device has the reconnection mechanism, where the current voltage of the to-be-charged device is an actual voltage of the to-be-charged device, receive the second message, and request the power supply device to perform charging in the first charging mode.

In a possible implementation of the third aspect, the request unit is further specifically configured to: send a third message to the power supply device, and if the to-be-charged device receives, in a first preset time period, a fourth message from the power supply device in response to the third message, resend the first message to the power supply device.

In a possible implementation of the third aspect, the request unit is further specifically configured to: when the to-be-charged device receives a fifth message in a first preset time period, determine whether a fourth message sent by the power supply device is received in the first preset time period, and if the to-be-charged device receives, in a first preset time period, the fourth message sent by the power supply device, resend the first message to the power supply device.

In a possible implementation of the third aspect, the request unit is further configured to: if the power supply device does not have the reconnection mechanism, request the power supply device to perform charging in a second charging mode, and if the to-be-charged device and the power supply device meet a preset condition, request the power supply device to switch to the first charging mode.

In a possible implementation of the third aspect, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

In a possible implementation of the third aspect, the request unit is further configured to: determine whether switching to the first charging mode succeeds, and if switching to the first charging mode fails, request the power supply device to maintain the second charging mode.

In a possible implementation of the third aspect, when the to-be-charged device requests the power supply device to perform charging in the second charging mode, a requested voltage adjustment slope is less than or equal to a fourth threshold, and a requested current adjustment slope is less than or equal to a fifth threshold.

In a possible implementation of the third aspect, the current voltage of the to-be-charged device is a smaller value between a maximum input voltage of the to-be-charged device and an actual voltage of the to-be-charged device.

A fourth aspect of this application provides a power supply device, configured to perform the method according to the second aspect or any one of the possible implementations of the second aspect. Specifically, the power supply device includes modules or units configured to perform the method according to the second aspect or any one of the possible implementations of the second aspect, for example, a first sending unit, a receiving unit, a second sending unit, and a charging unit.

According to the fourth aspect, the first sending unit is configured to send an insulation detection voltage to a to-be-charged device; the receiving unit is configured to: when the insulation detection voltage is less than or equal to a first threshold, receive a first message sent by the to-be-charged device, where the first threshold is determined based on a full-charge voltage of the to-be-charged device, and the first message includes a current voltage of the to-be-charged device; the second sending unit is configured to send a second message to the to-be-charged device in response to the first message, where the second message includes a maximum output voltage of the power supply device; and the charging unit is configured to: when the maximum output voltage of the power supply device is greater than or equal to the full-charge voltage of the to-be-charged device, charge the to-be-charged device in a first charging mode.

In a possible implementation of the fourth aspect, the charging unit is specifically configured to: determine whether the power supply device has a reconnection mechanism, re-receive the first message sent by the to-be-charged device, if the power supply device has the reconnection mechanism, where the current voltage of the to-be-charged device is an actual voltage of the to-be-charged device, send the second message to the to-be-charged device, and charge the to-be-charged device in the first charging mode.

In a possible implementation of the fourth aspect, the charging unit is further specifically configured to: receive a third message sent by the to-be-charged device, and if the to-be-charged device receives, in a first preset time period, a fourth message from the power supply device in response to the third message, re-receive the first message sent by the to-be-charged device.

In a possible implementation of the fourth aspect, the charging unit is further specifically configured to: send a fifth message to the to-be-charged device, and if the to-be-charged device receives, in a first preset time period, a fourth message sent by the power supply device, re-receive the first message sent by the to-be-charged device.

In a possible implementation of the fourth aspect, the charging unit is further configured to: if the power supply device does not have the reconnection mechanism, charge the to-be-charged device in a second charging mode, and if the to-be-charged device and the power supply device meet a preset condition, switch to the first charging mode to charge the to-be-charged device.

In a possible implementation of the fourth aspect, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

In a possible implementation of the fourth aspect, when the power supply device charges the to-be-charged device in the second charging mode, a voltage adjustment slope is less than or equal to the third threshold, and a current adjustment slope is less than or equal to a fourth threshold.

In a possible implementation of the fourth aspect, the current voltage of the to-be-charged device is a smaller value between a maximum input voltage of the to-be-charged device and an actual voltage of the to-be-charged device.

A fifth aspect of this application provides a vehicle. The vehicle includes a to-be-charged device, and the to-be-charged device is configured to perform the method according to the first aspect or any one of the possible implementations of the first aspect.

A sixth aspect of this application provides a power supply device, configured to perform the method according to the second aspect or any one of the possible implementations of the second aspect.

A seventh aspect of this application provides a charging system. The charging system includes the to-be-charged device provided in the fifth aspect and the power supply device provided in the sixth aspect. The to-be-charged device is electrically connected to the power supply device, and the power supply device is configured to charge the to-be-charged device.

An eighth aspect of this application provides an electronic device. The electronic device includes a processor, a memory, and a computer-readable storage medium storing a computer program. The processor is coupled to the computer-readable storage medium, and computer-executable instructions are run on the processor. When the computer-executable instructions are executed by the processor, the processor performs the method according to the first aspect or any one of the possible implementations of the first aspect. Optionally, the electronic device may further include an input/output (input/output, I/O) interface, and the computer-readable storage medium storing the computer program may be a storage.

A ninth aspect of this application provides an electronic device. The electronic device includes a processor, a memory, and a computer-readable storage medium storing a computer program. The processor is coupled to the computer-readable storage medium, and computer-executable instructions are run on the processor. When the computer-executable instructions are executed by the processor, the processor performs the method according to the second aspect or any one of the possible implementations of the second aspect. Optionally, the electronic device may further include an input/output (input/output, I/O) interface, and the computer-readable storage medium storing the computer program may be a storage.

According to a tenth aspect, this application provides a computer-readable storage medium storing one or more computer-executable instructions. When the computer-executable instructions are executed by a processor, the processor performs the method according to the first aspect or any one of the possible implementations of the first aspect.

According to an eleventh aspect, this application provides a computer-readable storage medium storing one or more computer-executable instructions. When the computer-executable instructions are executed by a processor, the processor performs the method according to the second aspect or any one of the possible implementations of the second aspect.

A twelfth aspect of this application provides a computer program product storing one or more computer-executable instructions. When the computer-executable instructions are executed by a processor, the processor performs the method according to the first aspect or any one of the possible implementations of the first aspect.

A thirteenth aspect of this application provides a computer program product storing one or more computer-executable instructions. When the computer-executable instructions are executed by a processor, the processor performs the method according to the second aspect or any one of the possible implementations of the second aspect.

A fourteenth aspect of this application provides a chip system. The chip system includes at least one processor and an interface. The interface is configured to receive data and/or a signal. The at least one processor is configured to support a computer device in implementing the related function in the first aspect or any one of the possible implementations of the first aspect. In a possible design, the chip system further includes a storage. The storage is configured to store program instructions and data that are necessary for a computer device. The chip system may include a chip, or may include a chip and another discrete device.

A fifteenth aspect of this application provides a chip system. The chip system includes at least one processor and an interface. The interface is configured to receive data and/or a signal. The at least one processor is configured to support a computer device in implementing the related function in the second aspect or any one of the possible implementations of the second aspect. In a possible design, the chip system further includes a storage. The storage is configured to store program instructions and data that are necessary for a computer device. The chip system may include a chip, or may include a chip and another discrete device.

In embodiments of this application, when the insulation detection voltage is less than or equal to the first threshold determined based on the full-charge voltage of the to-be-charged device, the to-be-charged device obtains the maximum output voltage of the power supply device by exchanging the first message and the second message with the power supply device, and determines, based on the maximum output voltage, whether the power supply device is a high-voltage pile, to further determine whether to use a direct charging manner. This avoids misidentification and charging interruption, and resolves problems of decreased charging efficiency and increased power consumption.

### BRIEF DESCRIPTION OF DRAWINGS

FIG. 1a to FIG. 1d are diagrams of an architecture of a charging module of a vehicle;
FIG. 2 is a diagram of a charging procedure of a vehicle;
FIG. 3A and FIG. 3B are a diagram of an embodiment of a charging detection method according to an embodiment of this application;
FIG. 4 is a diagram of another embodiment of a charging detection method according to an embodiment of this application;
FIG. 5 is a diagram of another embodiment of a charging detection method according to an embodiment of this application;
FIG. 6 is a diagram of another embodiment of a charging detection method according to an embodiment of this application;
FIG. 7 is a diagram of an embodiment of a to-be-charged device according to an embodiment of this application;
FIG. 8 is a diagram of an embodiment of a power supply device according to an embodiment of this application;
FIG. 9 is a diagram of an embodiment of a charging system according to an embodiment of this application; and
FIG. 10 is a diagram of an embodiment of an electronic device according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in appropriate circumstances so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that the subject matter of this application is highlighted.

Embodiments of this application provide a charging detection method, to avoid misidentification and charging interruption, and resolve problems of decreased charging efficiency and increased power consumption. Embodiments of this application further provide a corresponding to-be-charged device, a power supply device, a charging system, a computer device, a computer-readable storage medium, and the like. Details are separately described in the following.

The following uses an example to describe an application scenario related to embodiments of this application.

With continuous development of new energy vehicle technologies, a voltage level of a battery pack of a vehicle gradually shifts to a high voltage (for example, 750 V and 900 V). However, there is currently still an inventory of direct current charging piles with a maximum output voltage less than or equal to 500 V on a market. When a maximum output voltage of a charging pile is greater than a voltage of the battery pack of the vehicle, the vehicle directly charges the battery pack by using the charging pile, that is, in a first charging mode (a direct charging manner), to form a direct charge loop in a charging module of the vehicle. When the maximum output voltage of the charging pile is less than a voltage of the battery pack of a vehicle, the vehicle needs to boost an input voltage of the charging pile and then charge the battery pack, that is, in a second charging mode (a boost charging manner), to form a boost charge loop in the charging module of the vehicle. To meet charging requirements of charging piles with different output voltage levels and different charging scenarios, the vehicle needs to proactively identify an output capability of the charging pile, select an appropriate direct current charging manner, and can switch between the second charging mode and the first charging mode.

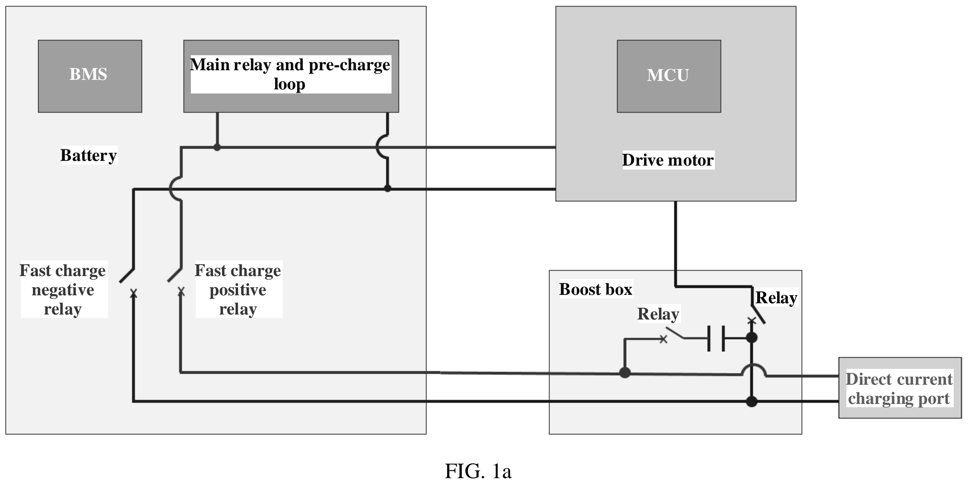

As shown in FIG. 1a, a charging module of a vehicle includes a battery, a drive motor, a boost box, and a direct current charging port. The battery is specifically a battery pack or a cell. In this embodiment of this application, an example in which the battery is a battery pack is used for description. The battery further includes a battery management system (battery management system, BMS), a main relay, and a pre-charge loop. The drive motor includes a motor and a motor control unit (motor control unit, MCU). The BMS is a main control component of a charging mode, and is configured to: identify a capability of a charging pile, request a charge voltage and current, control main positive/negative relays, control fast charge positive/negative relays, and coordinate and control a boost charging mode. The MCU is an execution component of a second charging mode, and is configured to respond to a mode request, an output voltage request, a current request, and the like of the BMS. The boost box is also an execution component of the second charging mode, and is configured to respond to a relay action request of the BMS.

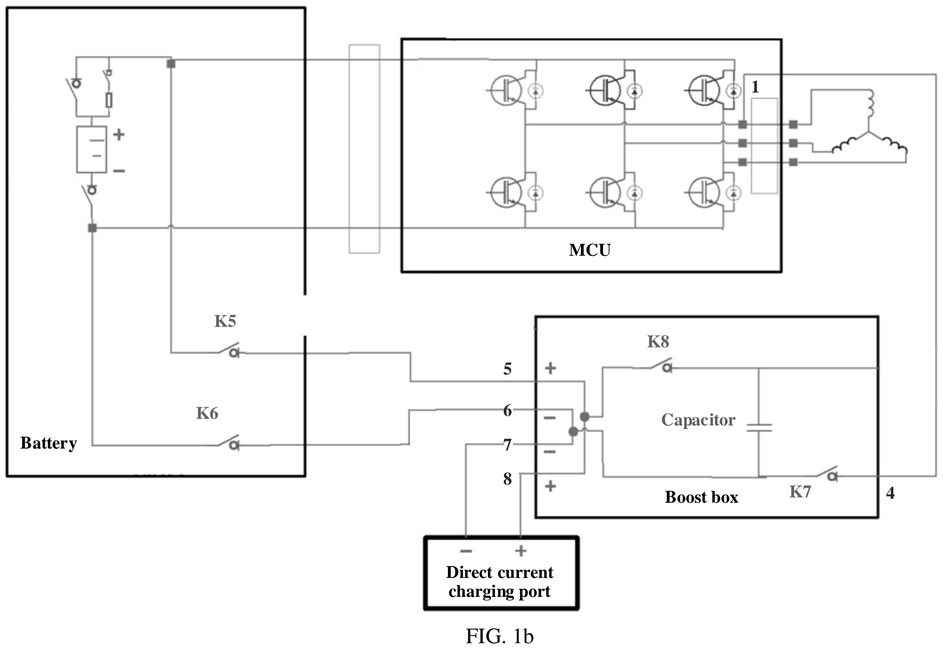

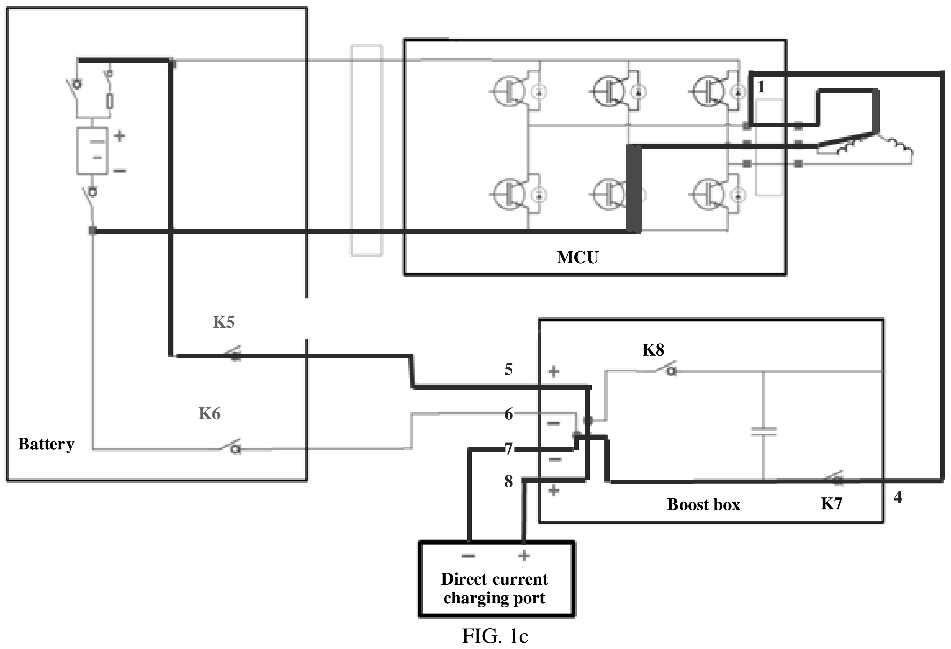

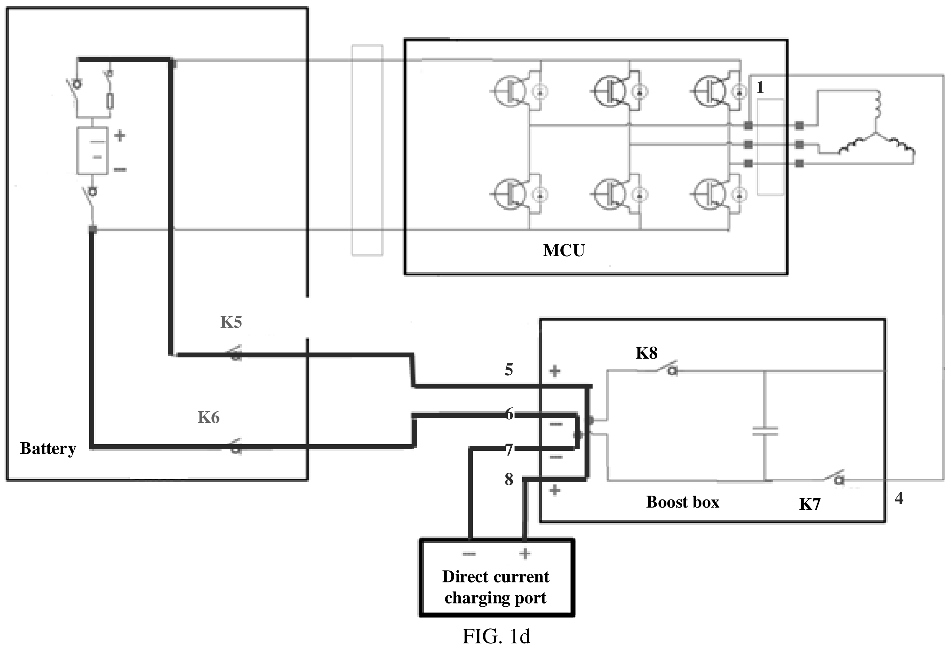

Specifically, as shown in FIG. 1b, a charging module in FIG. 1b is a more specific form of the charging module shown in FIG. 1a. As shown in FIG. 1c, in the second charging mode, the BMS controls a fast charge positive relay K5 to be turned on, and controls a capacitor in the boost box to connect to a boost charge loop, to form a boost (boost) circuit (a switching direct current boost circuit) with the motor and the MCU, that is, controls K7 and K8 relays in the boost box to be turned on, to form 4, 5, 6, and 8 pathways (dark loops in FIG. 1c). Working in a boost mode, the MCU controls an insulated gate bipolar transistor (insulated gate bipolar transistor, IGBT) to be conducted, boosts a capacitor voltage of the boost box (namely, a voltage of the direct current charging port) to a current voltage of the MCU (namely, a voltage of the battery pack), and charges the battery pack in the second charging mode by using the MCU. As shown in FIG. 1d, in the first charging mode, the BMS controls the fast charge positive relay K5 and a fast charge negative relay K6 to be turned on, and controls the capacitor in the boost box to disconnect from a loop in the second charging mode, that is, the K7 and K8 relays in the boost box are turned off. The MCU does not work, and the MCU controls the IGBT not to be conducted, to form the 5, 6, 7, and 8 pathways (dark loops in FIG. 1d). The charging pile directly charges the battery pack through the direct current charging port.

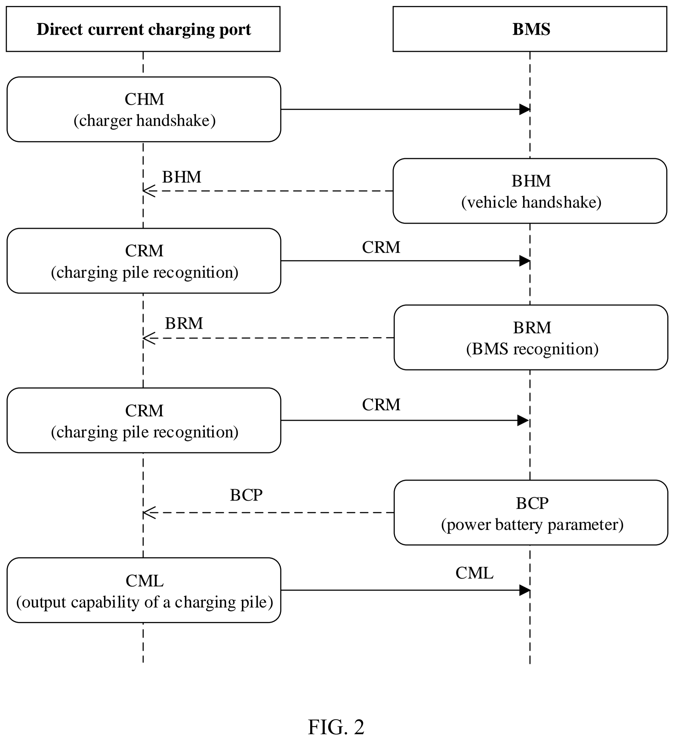

As shown in FIG. 2, a charging procedure in the national standard GB 27930-2015 may be divided into a charging handshake phase, a charging parameter configuration phase, and a charging phase. A charging pile interacts with a BMS in a vehicle a plurality of times through a direct current charging port. In the charging handshake phase, the charging pile sends a charger handshake message (CHM) to the BMS, and the BMS responds to the charging pile with a vehicle handshake message (BHM), so that the charging pile and the BMS determine a standard version used by the charging pile and the BMS, and then insulation detection is performed. That is, in this case, the BMS may obtain an insulation detection voltage value of the charging pile by using a detection circuit. Then, the charging pile sends a charger recognition message (CRM) to the BMS. The BMS responds to the BMS and the charging pile with a vehicle recognition message (BRM). The charging pile may further resend a CRM to determine necessary information about a battery pack of the vehicle and the charging pile. In the charging parameter configuration phase, the BMS needs to send a power battery charging parameter message (BCP) to the charging pile. After the charging pile responds with a charger maximum output capacity message (CML), charging request information can start to be exchanged.

When selecting a charging manner, the vehicle may determine a maximum output voltage of the charging pile based on the insulation detection voltage obtained through insulation detection, or may determine the maximum output voltage of the charging pile based on the CML. When the maximum output voltage of the charging pile is greater than a voltage of the battery pack, the vehicle determines that the charging pile is a high-voltage (charging) pile, and selects a first charging mode. When the maximum output voltage of the charging pile is less than a voltage of the battery pack of the vehicle, the vehicle determines that the charging pile is a low-voltage (charging) pile, and selects a second charging mode.

However, to avoid damage to a battery of the vehicle, the charging pile limits the insulation detection voltage to a voltage that is not greater than a maximum voltage of the battery pack. Therefore, insulation detection voltages output by some high-voltage charging piles are at a low voltage level (for example, a 750 V charging pile outputs 500 V for insulation detection), and the vehicle incorrectly identifies the high-voltage piles as low-voltage piles based on the insulation detection voltages, and inappropriately uses the second charging mode.

According to the charging handshake procedure specified in the national standard, before the charging pile sends the CML, the vehicle needs to send the BCP message to report a current total voltage of the battery pack. If the current total voltage of the battery pack is greater than the maximum output voltage of the charging pile, or the charging pile detects, during the start of charging, that a deviation between a voltage at a moment when the battery is connected and a received BCP message exceeds a specified value, the charging pile actively stops power supply. Therefore, if an output capability of the charging pile is identified based on the maximum output voltage sent in the CML, an input voltage (low voltage) for the second charging mode needs to be first sent when the BCP is sent. The vehicle starts direct current charging in the second charging mode, and then determines, based on a charging pile voltage level fed back by the CML message, whether to switch to the first charging mode.

Based on the foregoing charging detection/identification method, the following charging scenarios may occur:
Scenario 1: A vehicle battery voltage platform is 750 V, a user uses a charging pile with a maximum output of 500 V for charging, and the vehicle is charged in the second charging mode.
Scenario 2: A vehicle battery voltage platform is 750 V, a user uses a charging pile with a maximum output of 750 V or 1000 V for charging, and the vehicle is charged in the first charging mode.
Scenario 3: A vehicle battery voltage platform is 750 V, a user uses a charging pile with a maximum output of 750 V or 1000 V for charging, and the vehicle is charged first in the second charging mode and then in the first charging mode through switching.
Scenario 4: A vehicle battery voltage platform is 750 V, a user uses a charging pile with a maximum output of 750 V or 1000 V for charging, and the vehicle is charged in the second charging mode.

In comparison with the first charging mode, in the second charging mode, more elements in a charging module participate in work, control logic is complex, charging efficiency is low, and charging power is low. Therefore, it needs to be ensured that the vehicle may use the first charging mode as much as possible. However, it can be learned from analysis of the foregoing scenarios that, in the scenario 3 and the scenario 4, the vehicle may inappropriately use the second charging mode due to an inappropriate identification method.

It should be understood that a charging detection method provided in an embodiment of this application is applicable to all rechargeable carriers (or understood as including a power battery). The carrier in this application may include road transportation, water transportation, air transportation, an industrial device, an agricultural device, an entertainment device, or the like. For example, the carrier may be a vehicle. The vehicle is a vehicle in a broad sense, and may be transportation (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the carrier may be transportation like an aircraft or a ship.

The following describes, with reference to the foregoing application scenarios, the charging detection methods provided in embodiments of this application.

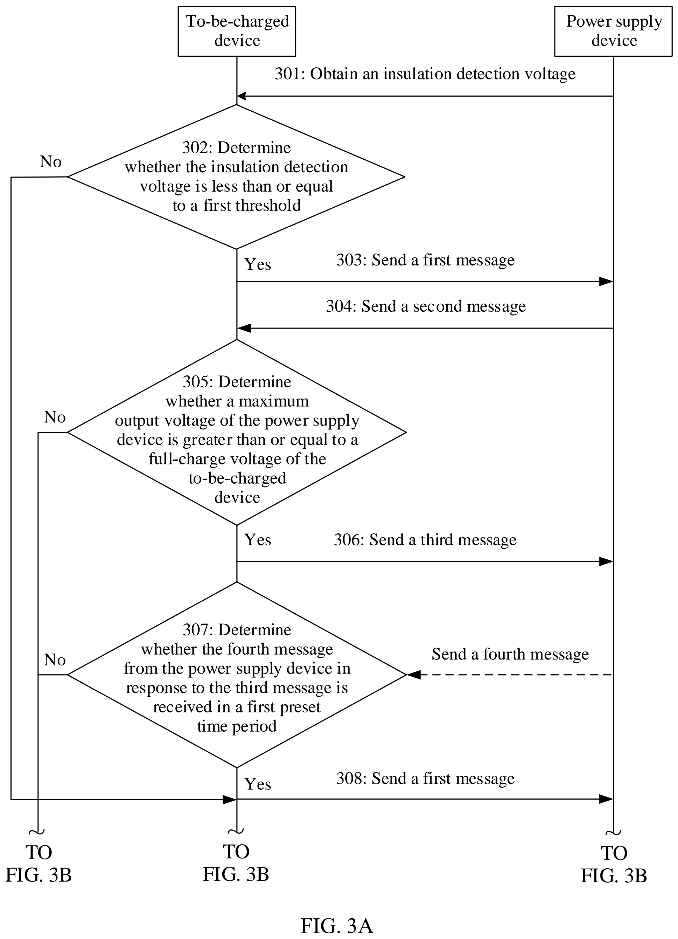

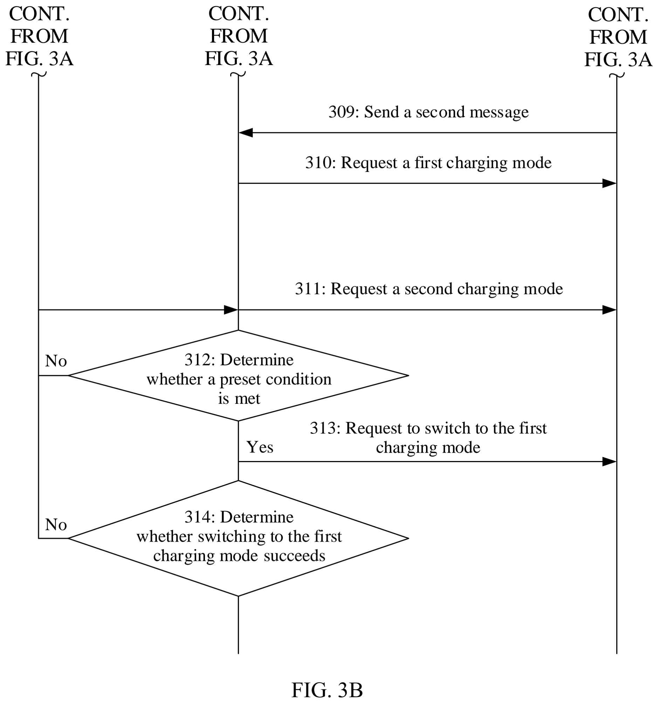

As shown in FIG. 3A and FIG. 3B, an embodiment of a charging detection method according to an embodiment of this application includes the following steps.

301: A to-be-charged device obtains an insulation detection voltage of a power supply device.

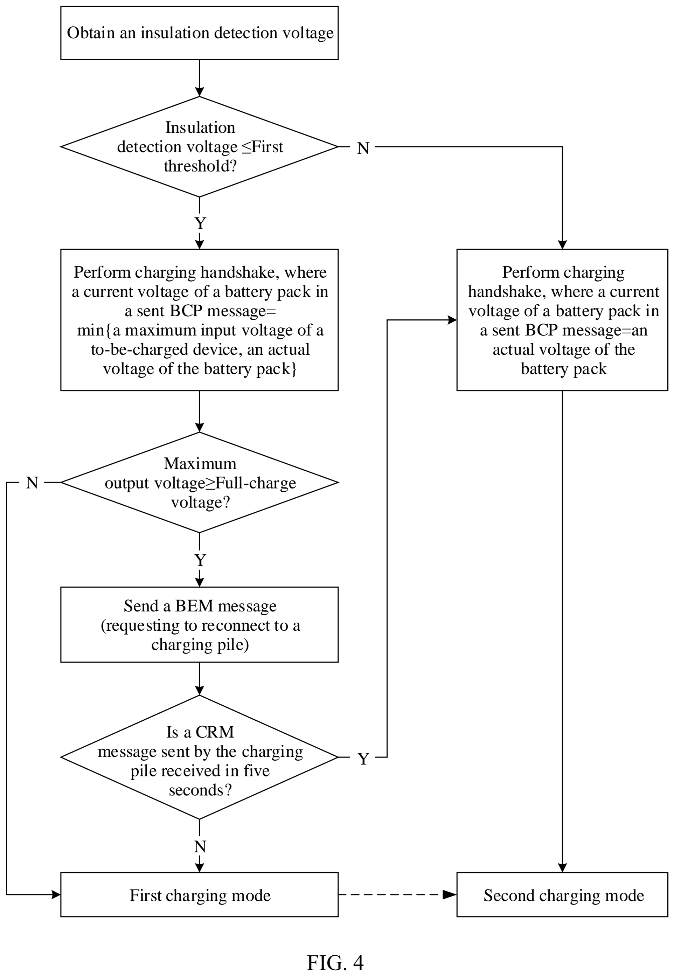

Refer to FIG. 4. The to-be-charged device in this embodiment of this application is a rechargeable carrier with a boost charging capability, and may be specifically a vehicle, or a power battery module (the charging module) in the vehicle shown in FIG. 1a to FIG. 1d. For example, a battery pack in the vehicle is a 750 V voltage platform, and a specific full-charge voltage is 740 V. The power supply device is a direct current charging pile. The to-be-charged device is pre-connected to the power supply device, and a user controls the power supply device to start charging the to-be-charged device.

In a charging handshake phase, the power supply device initiates insulation detection, the power supply device performs insulation detection on the to-be-charged device, and the to-be-charged device collects the insulation detection voltage of the power supply device to obtain the insulation detection voltage of the power supply device. That is, the power supply device sends, to the to-be-charged device, the insulation detection voltage, specifically a voltage of a direct current charging port that is collected by a BMS in the vehicle. During insulation detection, the BMS uses a maximum value of collected insulation detection voltages as an insulation detection voltage for subsequent use.

302: The to-be-charged device determines whether the insulation detection voltage is less than or equal to a first threshold.

After obtaining the insulation detection voltage, the to-be-charged device determines whether the insulation detection voltage is less than or equal to the first threshold. The first threshold is determined based on a full-charge voltage (a voltage present when the battery pack is fully charged) of the to-be-charged device (battery pack). That is, the first threshold is set based on the full-charge voltage of the battery pack, a rated level specified in a charging pile national standard, a detection error, an offset, and the like. For example, the first threshold is 700 V.

When the insulation detection voltage is less than or equal to the first threshold, it is preliminarily determined that the direct current charging pile is a low-voltage charging pile (a maximum voltage of the charging pile is less than the full-charge voltage of the battery pack), and step 303 is performed. When the insulation detection voltage is greater than the first threshold, it may be determined that the direct current charging pile is a high-voltage charging pile (a maximum voltage of the charging pile is greater than or equal to the full-charge voltage of the battery pack), a first charging mode should be used, and step 308 is performed.

303: The to-be-charged device sends a first message to the power supply device.

304: The power supply device sends a second message to the to-be-charged device in response to the first message.

From the perspective of a capability of the charging pile or for safety reasons, the insulation detection voltage output by the charging pile is less than a maximum voltage (the full-charge voltage of the battery pack) of the to-be-charged device or the first threshold. Therefore, it may be preliminarily determined that the direct current charging pile is a low-voltage charging pile. In this case, whether the power supply device is actually a low-voltage charging pile needs to be determined by exchanging a message. That is, a charging parameter configuration phase is entered. To be specific, the to-be-charged device sends the first message to the power supply device, where the first message includes a current voltage of the to-be-charged device, that is, the first message is a BCP message; after receiving the first message sent by the to-be-charged device, the power supply device sends the second message to the to-be-charged device in response to the first message, where the second message includes a maximum output voltage of the power supply device, and the second message is a CML message; and the to-be-charged device receives the second message from the power supply device in response to the first message. In other words, the CML message includes the maximum output voltage of the power supply device.

To prevent the direct current charging pile from actively stopping power supply when a current voltage of the battery pack is greater than the maximum output voltage of the charging pile, or the direct current charging pile detects, during the start of charging, that a deviation between a voltage at a moment when the battery is connected and a received BCP message exceeds a specified value, the current voltage of the to-be-charged device in the first message is a smaller value between a maximum input voltage of the to-be-charged device and an actual voltage of the to-be-charged device, that is, a current voltage of a battery pack that is sent in the BCP message should not be greater than an output voltage level of the charging pile. For example, the current voltage of the to-be-charged device=min {the maximum input voltage of the to-be-charged device, the actual voltage of the battery pack}.

Optionally, to ensure normal operating of the to-be-charged device that is being charged in the second charging mode and further prevent the direct current charging pile from actively stopping power supply, a reserved margin may be subtracted from the current voltage of the to-be-charged device that is sent in the first message, that is, the current voltage of the to-be-charged device=min{the maximum input voltage of the to-be-charged device-the reserved margin, the actual voltage of the battery pack-the reserved margin}. The reserved margin may be 20 V. A worker may adjust and select the reserved margin by comprehensively considering power and efficiency of the to-be-charged device according to a requirement. For example, in a battery pack of a 750 V voltage platform, a maximum input voltage of a to-be-charged device minus the reserved margin is 490 V.

305: The to-be-charged device determines whether the maximum output voltage of the power supply device is greater than or equal to the full-charge voltage of the to-be-charged device.

After obtaining the maximum output voltage of the power supply device, the to-be-charged device needs to determine whether the maximum output voltage of the power supply device is greater than or equal to the full-charge voltage of the to-be-charged device. When the maximum output voltage of the power supply device is greater than or equal to the full-charge voltage of the to-be-charged device, it may be determined that the power supply device is a high-voltage charging pile, the first charging mode should be used, and step 306 is performed. When the maximum output voltage of the power supply device is less than the full-charge voltage of the to-be-charged device, it may be determined that the power supply device is a low-voltage charging pile, the second charging mode should be used, and step 311 is performed.

306: The to-be-charged device sends a third message to the power supply device.

307: The to-be-charged device determines whether a fourth message from the power supply device in response to the third message is received in a first preset time period.

When it is determined that the power supply device is a high-voltage charging pile and the first charging mode should be used, the to-be-charged device requests to be charged in the first charging mode. Because the foregoing steps are steps in which the second charging mode is used, the current voltage of the to-be-charged device sent in the first message is adjusted, and the to-be-charged device further needs to determine whether the power supply device has a reconnection mechanism. Specifically, the to-be-charged device sends the third message to the power supply device, where the third message is a BMS error message (BEM). The power supply device receives the third message sent by the to-be-charged device. When the power supply device has the reconnection mechanism, the power supply device sends the fourth message to the to-be-charged device in response to the third message, where the fourth message is a CRM.

To prevent the charging pile from stopping work due to an excessively long waiting time, the to-be-charged device needs to determine whether the fourth message from the power supply device in response to the third message is received in the first preset time period. If the to-be-charged device receives the fourth message from the power supply device in response to the third message in the first preset time period, the to-be-charged device determines that the power supply device has the reconnection mechanism, and step 308 is performed. If the to-be-charged device does not receive the fourth message from the power supply device in response to the third message in the first preset time period, the to-be-charged device determines that the power supply device does not have the reconnection mechanism, only the second charging mode may continue to be used, and step 311 is performed.

Optionally, steps 306 and 307 are steps of determining whether the power supply device has the reconnection mechanism, namely, steps in which the to-be-charged device requests to reconnect to the power supply device. However, the power supply device may alternatively actively initiate a reconnection request, and steps 306 and 307 may be replaced with step 3061.

3061: When the to-be-charged device receives a fifth message in the first preset time period, the to-be-charged device determines whether a fourth message sent by the power supply device is received in the first preset time period.

When the power supply device actively initiates a reconnection request, the BMS suspends sending a message to the charging pile. If receiving a fifth message fed back by the charging pile in the first preset time period (5s), namely, a charger error message (CEM), the to-be-charged device waits to receive a fourth message sent by the charging pile, namely, a CRM message.

If the to-be-charged device receives the fourth message in the first preset time period (5s), the to-be-charged device determines that the power supply device has the reconnection mechanism, and step 308 is performed. If the to-be-charged device does not receive the fourth message in the first preset time period, the to-be-charged device determines that the power supply device does not have the reconnection mechanism, can only continue to use the second charging mode and subsequently attempt to switch to the first charging mode, and step 311 is performed.

308: The to-be-charged device sends a first message to the power supply device.

309: The power supply device sends a second message to the to-be-charged device in response to the first message.

310: The to-be-charged device requests the power supply device to perform charging in the first charging mode.

In step 302, when the insulation detection voltage is greater than the first threshold, it may be determined that the direct current charging pile is a high-voltage charging pile, and the first charging mode should be used. In this case, the to-be-charged device sends the first message to the power supply device. The current voltage of the to-be-charged device in the first message is the actual voltage of the to-be-charged device. It should be understood that the actual voltage of the to-be-charged device fluctuates with a state of charge of a charging pack. However, the power supply device still sends the second message to the to-be-charged device in response to the first message, and then a charging phase is entered. The to-be-charged device requests the power supply device to perform charging in the first charging mode, and the power supply device charges the to-be-charged device in the first charging mode.

In step 307, if the power supply device has the reconnection mechanism, the to-be-charged device resends the first message to the power supply device. In this case, the current voltage of the to-be-charged device in the first message is also the actual voltage of the to-be-charged device. The power supply device re-receives the first message sent by the to-be-charged device. The power supply device sends the second message to the to-be-charged device in response to the first message, and then the charging phase is entered. The to-be-charged device requests the power supply device to perform charging in the first charging mode and the power supply device charges the to-be-charged device in the first charging mode.

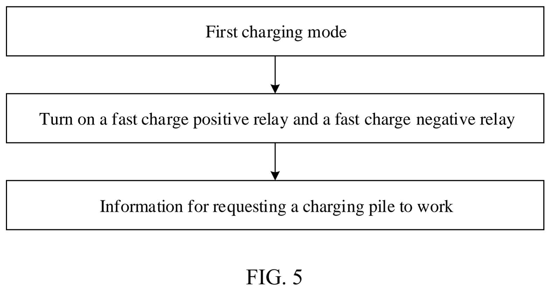

Specifically, refer to FIG. 5. When the first charging mode is used, the BMS requests to turn on a fast charge positive relay and a fast charge negative relay, and the BMS requests the charging pile to work as follows: A working mode is a constant current mode, a requested voltage is the actual voltage of the battery pack plus an offset, and a requested current is an allowed charging current of the battery pack plus a load consumption current.

311: The to-be-charged device requests the power supply device to perform charging in the second charging mode.

In step 305, when the maximum output voltage of the power supply device is less than the full-charge voltage of the to-be-charged device, it may be determined that the power supply device is a low-voltage charging pile, and the second charging mode should be used. The to-be-charged device requests the power supply device to perform charging in the second charging mode, and the power supply device charges the to-be-charged device in the second charging mode.

In step 308, if the to-be-charged device does not receive the fourth message from the power supply device in response to the third message in the first preset time period, the to-be-charged device determines that the power supply device does not have the reconnection mechanism, and only the second charging mode may continue to be used. The to-be-charged device requests the power supply device to perform charging in the second charging mode, and the power supply device charges the to-be-charged device in the second charging mode.

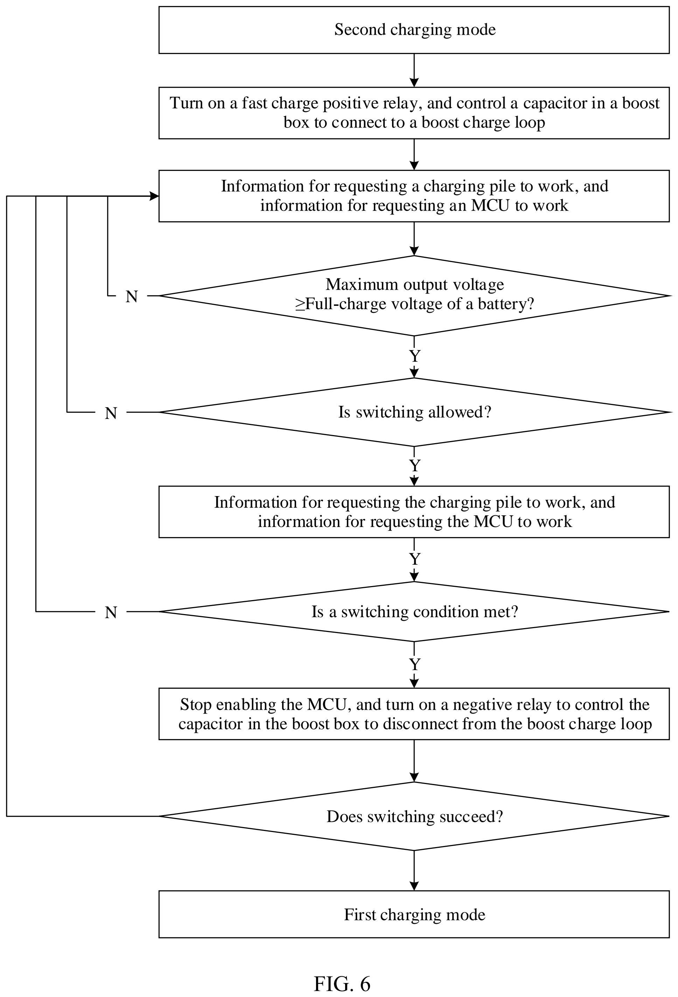

Specifically, refer to FIG. 6. When the second charging mode is used, the BMS controls to turn on the fast charge positive relay, and controls a capacitor in a boost box to connect to a boost charge loop, to enable an MCU to pre-charge the capacitor in the boost box to a target voltage (consistent with a voltage of a battery pack in the sent BCP message). Then, the BMS requests the charging pile to work as follows: A working mode is a constant voltage mode, a requested voltage should not be greater than the output voltage level of the charging pile. Specifically, the current voltage of the to-be-charged device is the smaller value between the maximum input voltage of the to-be-charged device and the actual voltage of the to-be-charged device, and a requested current is a maximum output current of the charging pile reported by the CML message. Then, the BMS requests the MCU for the second charging mode as follows: A working mode is a constant current mode, a requested voltage is the actual voltage of the battery pack plus the offset, and a requested current is the allowed charging current of the battery pack plus the load consumption current.

Optionally, the boost box performs two-phase boost (charging by using a two-phase winding of a motor in the second charging mode). When the to-be-charged device requests the power supply device to perform charging in the second charging mode, a requested voltage adjustment slope is less than or equal to a fourth threshold, and a requested current adjustment slope is less than or equal to a fifth threshold, so that a wheel-end torque change rate is less than a preset value, to reduce a wheel end impact caused by two-phase boost. For example, the fourth threshold is 5 V/s, and the fifth threshold is 10 A/s.

312: The to-be-charged device determines whether a preset condition is met.

When step 308 changes to step 311, the to-be-charged device may determine that the charging pile is a high-voltage charging pile but has no reconnection mechanism, and the second charging mode is maintained. Therefore, after the second charging mode is used, there is a need to further switch to the first charging mode. In this case, the to-be-charged device needs to determine whether the to-be-charged device and the power supply device meet the preset condition.

Specifically, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold. The second threshold may be one time, the second preset time period is 3 minutes, the third threshold is 10 V, and the third threshold is a minimum voltage difference of the second charging mode of the MCU. Limiting the third threshold can avoid sticking (the relay cannot be turned on or off) caused when the relay is turned on.

When the preset condition includes all the foregoing conditions, the to-be-charged device determines that the preset condition is met and allows switching to the first charging mode only when the to-be-charged device requests the power supply device to switch to the first charging mode for the first time, the to-be-charged device is not in a pre-charge heating state, and the difference between the output voltage of the power supply device and the current voltage of the to-be-charged device is less than or equal to 10 V within 3 minutes, and the power supply device switches to the first charging mode to charge the to-be-charged device, and step 313 is performed. If one condition of the preset condition is not met, the second charging mode is maintained, or this process returns to perform step 311.

Optionally, the preset condition further includes whether the maximum output voltage of the charging pile is greater than or equal to the full-charge voltage of the battery pack (a full-charge voltage of the battery). In other words, when the to-be-charged device determines whether the preset condition is met, the to-be-charged device may further re-determine whether the charging pile is a high-voltage charging pile. That is, the to-be-charged device re-receives the CML message sent by the power supply device, and determines whether the maximum output voltage of the charging pile is greater than or equal to the full-charge voltage of the battery pack. If the maximum output voltage of the charging pile is greater than or equal to the full-charge voltage of the battery pack, the to-be-charged device determines that the charging pile is a high-voltage pile, and there is a need to switch to the first charging mode. If the maximum output voltage of the charging pile is less than the full-charge voltage of the battery pack, the to-be-charged device determines that the current charging pile is a low-voltage pile, and the to-be-charged device continues to be charged in the second charging mode continues to be used.

It should be understood that, after step 313 is performed, a quantity of times that the to-be-charged device requests the power supply device to switch to the first charging mode is counted. In other words, determining the preset condition does not affect the quantity of requests.

313: The to-be-charged device requests the power supply device to switch to the first charging mode.

When switching to the first charging mode is allowed, because a switching adjustment time is long, to ensure that charging continues during switching, the to-be-charged device still needs to request the second charging mode, to ensure that the charging pile does not stop working. This procedure is the same as that of requesting the second charging mode. A difference lies in that when the BMS requests the charging pile to work, a requested voltage is the actual voltage of the battery pack.

Optionally, a condition in the preset condition may be determined after the second charging mode is requested, where the difference between the output voltage of the power supply device and the current voltage of the to-be-charged device is less than or equal to the third threshold in the second preset time period. The preset condition may be understood as whether a switching condition is met, and another preset condition may be understood as whether switching is allowed.

When the to-be-charged device requests the power supply device to switch to the first charging mode, the to-be-charged device stops enabling the MCU, to cause the MCU to stop the second charging mode. After the MCU is shut down, the to-be-charged device turns on the (fast charge) negative relay, controls the capacitor in the boost box to disconnect from a second charging mode loop, and is charged in the first charging mode.

314: The to-be-charged device determines whether switching to the first charging mode succeeds.

Because step 313 may fail to be performed, a switching failure (for example, the MCU fails to be shut down or the negative relay fails to be turned on) needs to be further considered. If switching to the first charging mode fails, the to-be-charged device requests the power supply device to maintain the second charging mode, or if switching succeeds, the power supply device maintains the first charging mode.

It can be learned from the foregoing embodiment that beneficial effects of the charging detection method provided in this embodiment of this application include but are not limited to the following three points:
(1) A high-voltage pile and a low-voltage pile are identified according to both an insulation detection method and a message exchange method, to improve accuracy of charging pile identification, and avoid inappropriate use of a boost charging manner. This resolves problems of decreased charging efficiency and increased power consumption, and improves a service life of a motor of the vehicle.
(2) After switching from the boost charging manner to a direct current charging manner fails, boost charging may be maintained, to avoid poor charging experience caused by abnormal charging interruption.
(3) Switching a charging pile output and MCU output is coordinated and controlled, to control requested voltage and current rising slopes, and effectively reduce a wheel end impact caused by two-phase boost charging.

The foregoing describes the charging detection methods provided in embodiments of this application. The following describes related devices provided in embodiments of this application with reference to the accompanying drawings.

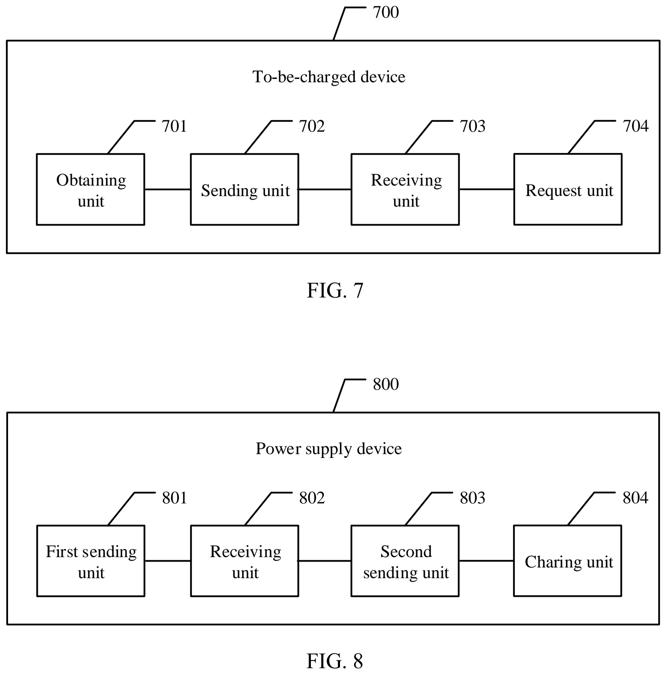

As shown in FIG. 7, an embodiment of a to-be-charged device 700 according to an embodiment of this application includes:
an obtaining unit 701, configured to obtain an insulation detection voltage of a power supply device, where the obtaining unit 701 may perform step 301 in the foregoing method embodiments;
a sending unit 702, configured to: when the insulation detection voltage is less than or equal to a first threshold, send a first message to the power supply device, where the first threshold is determined based on a full-charge voltage of the to-be-charged device, and the first message includes a current voltage of the to-be-charged device, where the sending unit 702 may perform step 303 in the foregoing method embodiments;
a receiving unit 703, configured to receive a second message of the power supply device in response to the first message, where the second message includes a maximum output voltage of the power supply device, where the receiving unit 703 may perform step 304 in the foregoing method embodiments; and
a request unit 704, configured to: when the maximum output voltage of the power supply device is greater than or equal to the full-charge voltage of the to-be-charged device, request to be charged in a first charging mode, where the request unit 704 may perform step 310 in the foregoing method embodiments.

Optionally, the request unit 704 is specifically configured to: determine whether the power supply device has a reconnection mechanism, resend the first message to the power supply device if the power supply device has the reconnection mechanism, where the current voltage of the to-be-charged device is an actual voltage of the to-be-charged device, receive the second message, and request the power supply device to perform charging in the first charging mode.

Optionally, the request unit 704 is further specifically configured to: send a third message to the power supply device, and if the to-be-charged device receives, in a first preset time period, a fourth message from the power supply device in response to the third message, resend the first message to the power supply device.

Optionally, the request unit 704 is further specifically configured to: when the to-be-charged device receives a fifth message in a first preset time period, determine whether a fourth message sent by the power supply device is received in the first preset time period, and if the to-be-charged device receives, in a first preset time period, the fourth message sent by the power supply device, resend the first message to the power supply device.

Optionally, the request unit 704 is further configured to: if the power supply device does not have the reconnection mechanism, request the power supply device to perform charging in a second charging mode, and if the to-be-charged device and the power supply device meet a preset condition, request the power supply device to switch to the first charging mode.

Optionally, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

Optionally, the request unit 704 is further configured to: determine whether switching to the first charging mode succeeds, and if switching to the first charging mode fails, request the power supply device to maintain the second charging mode.

Optionally, when the to-be-charged device requests the power supply device to perform charging in the second charging mode, a requested voltage adjustment slope is less than or equal to a fourth threshold, and a requested current adjustment slope is less than or equal to a fifth threshold.

Optionally, the request unit 704 is specifically configured to: turn on a fast charge positive relay, and control a capacitor in a boost box to connect to a boost charge loop, to pre-charge the capacitor in the boost box to a target voltage.

Optionally, the request unit 704 is further specifically configured to turn on the fast charge positive relay and a fast charge negative relay.

Optionally, the current voltage of the to-be-charged device is a smaller value between a maximum input voltage of the to-be-charged device and an actual voltage of the to-be-charged device.

The to-be-charged device 700 provided in this embodiment of this application may be a vehicle, or may be the charging module of the vehicle shown in FIG. 2. For a specific implementation, refer to corresponding content in the foregoing embodiment of the charging detection methods. Details are not described herein again.

As shown in FIG. 8, an embodiment of a power supply device 800 according to an embodiment of this application includes:
a first sending unit 801, configured to send an insulation detection voltage to a to-be-charged device, where the first sending unit 801 may perform step 301 in the foregoing method embodiments;
a receiving unit 802, configured to: when the insulation detection voltage is less than or equal to a first threshold, receive a first message sent by the to-be-charged device, where the first threshold is determined based on a full-charge voltage of the to-be-charged device, and the first message includes a current voltage of the to-be-charged device, where the receiving unit 802 may perform step 303 in the foregoing method embodiments;
a second sending unit 803, configured to send a second message to the to-be-charged device in response to the first message, where the second message includes a maximum output voltage of the power supply device, where the second sending unit 803 may perform step 304 in the foregoing method embodiments; and
a charging unit 804, configured to: when the maximum output voltage of the power supply device is greater than or equal to the full-charge voltage of the to-be-charged device, charge the to-be-charged device in a first charging mode, where the charging unit 804 may perform step 310 in the foregoing method embodiments.

Optionally, the charging unit 804 is specifically configured to: determine whether the power supply device has a reconnection mechanism, re-receive the first message sent by the to-be-charged device, if the power supply device has the reconnection mechanism, where the current voltage of the to-be-charged device is an actual voltage of the to-be-charged device, send the second message to the to-be-charged device, and charge the to-be-charged device in the first charging mode.

Optionally, the charging unit 804 is further specifically configured to: receive a third message sent by the to-be-charged device, and if the to-be-charged device receives, in a first preset time period, a fourth message from the power supply device in response to the third message, re-receive the first message sent by the to-be-charged device.

Optionally, the charging unit 804 is further specifically configured to: send a fifth message to the to-be-charged device, and if the to-be-charged device receives, in a first preset time period, a fourth message sent by the power supply device, re-receive the first message sent by the to-be-charged device.

Optionally, the charging unit 804 is further configured to: if the power supply device does not have the reconnection mechanism, charge the to-be-charged device in a second charging mode, and if the to-be-charged device and the power supply device meet a preset condition, switch to the first charging mode to charge the to-be-charged device.

Optionally, the preset condition includes at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

Optionally, when the power supply device charges the to-be-charged device in the second charging mode, a voltage adjustment slope is less than or equal to the third threshold, and a current adjustment slope is less than or equal to a fourth threshold.

Optionally, the charging unit 804 is specifically configured to: enable the to-be-charged device to turn on a fast charge positive relay, and enable the to-be-charged device to control a capacitor in a boost box to connect to a boost charge loop, to pre-charge the capacitor in the boost box to a target voltage.

Optionally, the charging unit 804 is further specifically configured to enable the to-be-charged device to turn on the fast charge positive relay and a fast charge negative relay.

Optionally, the current voltage of the to-be-charged device is a smaller value between a maximum input voltage of the to-be-charged device and an actual voltage of the to-be-charged device.

The power supply device 800 provided in this embodiment of this application may be a direct current charging pile. For a specific implementation, refer to corresponding content in the foregoing embodiment of the charging detection methods. Details are not described herein again.

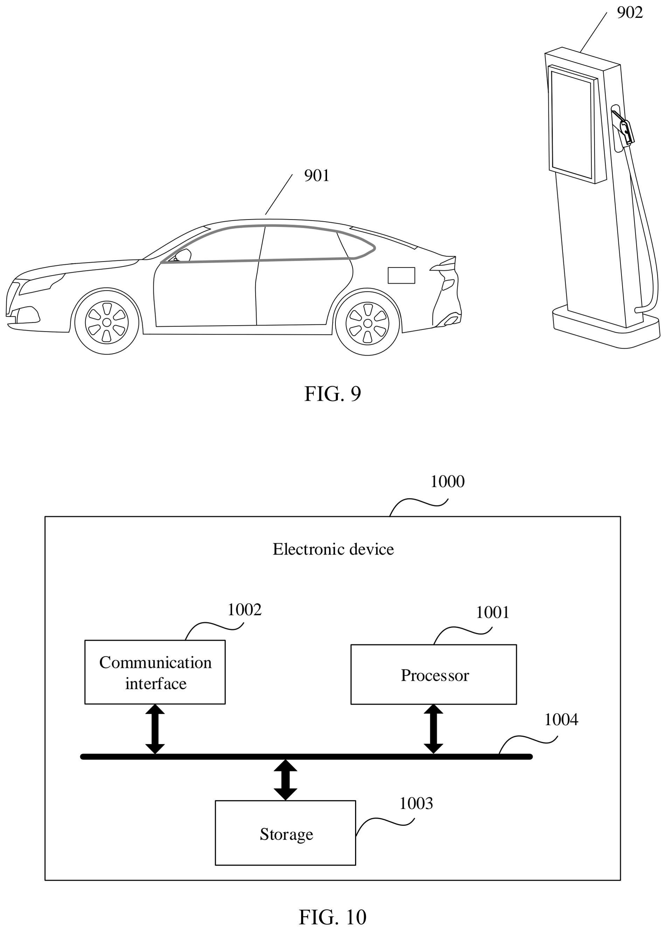

As shown in FIG. 9, an embodiment of this application further provides a charging system. The charging system includes a vehicle 901 and a power supply device 902. The vehicle 901 includes a to-be-charged device. The to-be-charged device is a power battery module of the vehicle 901. The to-be-charged device of the vehicle 901 is electrically connected to the power supply device 902. The power supply device 902 is configured to charge the to-be-charged device of the vehicle 901.

The to-be-charged device of the vehicle 901 may be the to-be-charged device shown in FIG. 7. The vehicle 901 may be a carrier (for example, a new energy vehicle capable of boost charging). The to-be-charged device of the vehicle 901 may be a charging module in the carrier, for example, the charging module shown in FIG. 1a to FIG. 1d. The power supply device 902 may be the power supply device shown in FIG. 8, and may be specifically a direct current charging pile. The to-be-charged device and the power supply device 902 of the vehicle 901 may perform the charging detection methods provided in embodiments of this application. For a specific implementation, refer to corresponding content in the foregoing embodiment of the charging detection methods. Details are not described herein again.

FIG. 10 is a diagram of a possible logical structure of an electronic device 1000 according to an embodiment of this application. The electronic device 1000 includes a processor 1001, a communication interface 1002, a storage 1003, and a bus 1004. The processor 1001 may include a CPU, or at least one of the following: the CPU, a GPU, an NPU, and a processor of another type. The processor 1001, the communication interface 1002, and the storage 1003 are connected to each other through the bus 1004. In this embodiment of this application, the processor 1001 is configured to control and manage an action of the electronic device 1000. For example, the processor 1001 is configured to perform the foregoing charging detection methods and/or another process of the technology described in this specification. The communication interface 1002 is configured to support the electronic device 100 in performing communication. The storage 1003 is configured to store program code and data that are of the electronic device 100.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 10, but this does not mean that there is only one bus or only one type of bus.

The electronic device 1000 may be specifically a module or a unit in a to-be-charged device or a power supply device. For a specific implementation, refer to corresponding content in the foregoing embodiment of the charging detection methods. Details are not described herein again.

In another embodiment of this application, a computer-readable storage medium is further provided. The computer-readable storage medium stores computer-executable instructions. When at least one processor of a device executes the computer-executable instructions, the device performs the foregoing charging detection methods.

In another embodiment of this application, a computer program product is further provided. The computer program product includes computer-executable instructions, and the computer-executable instructions are stored in a computer-readable storage medium, at least one processor of a device may read the computer-executable instructions from the computer-readable storage medium, and the at least one processor executes the computer-executable instructions, so that the device performs the foregoing charging detection methods.

In another embodiment of this application, a chip system is further provided. The chip system includes at least one processor and an interface. The interface is configured to receive data and/or a signal. The at least one processor is configured to support implementation of the foregoing charging detection methods. In a possible design, the chip system further includes a storage. The storage is configured to store program instructions and data that are necessary for a computer device. The chip system may include a chip, or may include a chip and another discrete device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus and methods may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A charging detection method, comprising:
obtaining, by a to-be-charged device, an insulation detection voltage of a power supply device;
when the insulation detection voltage is less than or equal to a first threshold, sending, by the to-be-charged device, a first message to the power supply device, wherein the first threshold is determined based on a full-charge voltage of the to-be-charged device, and the first message comprises a current voltage of the to-be-charged device;
receiving, by the to-be-charged device, a second message from the power supply device in response to the first message, wherein the second message comprises a maximum output voltage of the power supply device; and
when the maximum output voltage of the power supply device is greater than or equal to the full-charge voltage of the to-be-charged device, requesting, by the to-be-charged device, to be charged in a first charging mode.

2. The method according to claim 1, wherein the requesting, by the to-be-charged device, to be charged in a first charging mode comprises:
determining, by the to-be-charged device, whether the power supply device has a reconnection mechanism;
resending, by the to-be-charged device, the first message to the power supply device if the power supply device has the reconnection mechanism, wherein the current voltage of the to-be-charged device is an actual voltage of the to-be-charged device; and
receiving, by the to-be-charged device, the second message, and requesting the power supply device to perform charging in the first charging mode.

3. The method according to claim 2, wherein the determining, by the to-be-charged device, whether the power supply device has a reconnection mechanism comprises:
sending, by the to-be-charged device, a third message to the power supply device; and
the resending, by the to-be-charged device, the first message to the power supply device if the power supply device has the reconnection mechanism comprises:
if the to-be-charged device receives, in a first preset time period, a fourth message from the power supply device in response to the third message, resending, by the to-be-charged device, the first message to the power supply device.

4. The method according to claim 2, wherein the determining, by the to-be-charged device, whether the power supply device has a reconnection mechanism comprises:
when the to-be-charged device receives a fifth message in a first preset time period, determining, by the to-be-charged device, whether a fourth message sent by the power supply device is received in the first preset time period; and
the resending, by the to-be-charged device, the first message to the power supply device if the power supply device has the reconnection mechanism comprises:
if the to-be-charged device receives, in the first preset time period, the fourth message sent by the power supply device, resending, by the to-be-charged device, the first message to the power supply device.

5. The method according to any one of claims 2 to 4, wherein the method further comprises:
if the power supply device does not have the reconnection mechanism, requesting, by the to-be-charged device, the power supply device to perform charging in a second charging mode; and
if the to-be-charged device and the power supply device meet a preset condition, requesting, by the to-be-charged device, the power supply device to switch to the first charging mode.

6. The method according to claim 5, wherein the preset condition comprises at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

7. The method according to claim 5 or 6, wherein the method further comprises:
determining, by the to-be-charged device, whether switching to the first charging mode succeeds; and
if switching to the first charging mode fails, requesting, by the to-be-charged device, the power supply device to maintain the second charging mode.

8. The method according to any one of claims 5 to 7, wherein when the to-be-charged device requests the power supply device to perform charging in the second charging mode, a requested voltage adjustment slope is less than or equal to a fourth threshold, and a requested current adjustment slope is less than or equal to a fifth threshold.

9. The method according to any one of claims 5 to 7, wherein the requesting, by the to-be-charged device, the power supply device to perform charging in a second charging mode comprises:
turning on, by the to-be-charged device, a fast charge positive relay, and controlling a capacitor in a boost box to connect to a boost charge loop, to pre-charge the capacitor in the boost box to a target voltage.

10. The method according to any one of claims 1 to 9, wherein the requesting, by the to-be-charged device, to be charged in a first charging mode comprises:
turning on, by the to-be-charged device, the fast charge positive relay and a fast charge negative relay.

11. The method according to claim 1, wherein the current voltage of the to-be-charged device is a smaller value between a maximum input voltage of the to-be-charged device and an actual voltage of the to-be-charged device.

12. A charging detection method, comprising:
sending, by a power supply device, an insulation detection voltage to a to-be-charged device;
when the insulation detection voltage is less than or equal to a first threshold, receiving, by the power supply device, a first message sent by the to-be-charged device, wherein the first threshold is determined based on a full-charge voltage of the to-be-charged device, and the first message comprises a current voltage of the to-be-charged device;
sending, by the power supply device, a second message to the to-be-charged device in response to the first message, wherein the second message comprises a maximum output voltage of the power supply device; and
when the maximum output voltage of the power supply device is greater than or equal to the full-charge voltage of the to-be-charged device, charging, by the power supply device, the to-be-charged device in a first charging mode.

13. The method according to claim 12, wherein the charging, by the power supply device, the to-be-charged device in a first charging mode comprises:
determining, by the power supply device, whether the power supply device has a reconnection mechanism;
re-receiving, by the power supply device, the first message sent by the to-be-charged device, if the power supply device has the reconnection mechanism, wherein the current voltage of the to-be-charged device is an actual voltage of the to-be-charged device; and
sending, by the power supply device, the second message to the to-be-charged device, and charging the to-be-charged device in the first charging mode.

14. The method according to claim 13, wherein the determining, by the power supply device, whether the power supply device has a reconnection mechanism comprises:
receiving, by the power supply device, a third message sent by the to-be-charged device; and
the re-receiving, by the power supply device, the first message sent by the to-be-charged device, if the power supply device has the reconnection mechanism comprises:
if the to-be-charged device receives, in a first preset time period, a fourth message from the power supply device in response to the third message, re-receiving, by the power supply device, the first message sent by the to-be-charged device.

15. The method according to claim 13, wherein the determining, by the power supply device, whether the power supply device has a reconnection mechanism comprises:
sending, by the power supply device, a fifth message to the to-be-charged device; and
the re-receiving, by the power supply device, the first message sent by the to-be-charged device, if the power supply device has the reconnection mechanism comprises:
if the to-be-charged device receives, in a first preset time period, a fourth message sent by the power supply device, re-receiving, by the power supply device, the first message sent by the to-be-charged device.

16. The method according to any one of claims 13 to 15, wherein the method further comprises:
if the power supply device does not have the reconnection mechanism, charging, by the power supply device, the to-be-charged device in a second charging mode; and
if the to-be-charged device and the power supply device meet a preset condition, switching, by the power supply device, to the first charging mode to charge the to-be-charged device.

17. The method according to claim 16, wherein the preset condition comprises at least one of the following: a quantity of times that the to-be-charged device requests the power supply device to switch to the first charging mode is less than or equal to a second threshold, the to-be-charged device is not in a pre-charge heating state, and a difference between an output voltage of the power supply device in a second preset time period and the current voltage of the to-be-charged device is less than or equal to a third threshold.

18. The method according to claim 16 or 17, wherein when the power supply device charges the to-be-charged device in the second charging mode, a voltage adjustment slope is less than or equal to the third threshold, and a current adjustment slope is less than or equal to a fourth threshold.

19. The method according to any one of claims 16 to 18, wherein the charging, by the power supply device, the to-be-charged device in a second charging mode comprises:
enabling, by the power supply device, the to-be-charged device to turn on a fast charge positive relay, and enabling the to-be-charged device to control a capacitor in a boost box to connect to a boost charge loop, to pre-charge the capacitor in the boost box to a target voltage.

20. The method according to any one of claims 12 to 19, wherein the charging, by the power supply device, the to-be-charged device in a first charging mode comprises:
enabling, by the power supply device, the to-be-charged device to turn on the fast charge positive relay and a fast charge negative relay.

21. The method according to claim 12, wherein the current voltage of the to-be-charged device is a smaller value between a maximum input voltage of the to-be-charged device and an actual voltage of the to-be-charged device.

22. A to-be-charged device, comprising:
an obtaining unit, configured to obtain an insulation detection voltage of a power supply device;
a sending unit, configured to: when the insulation detection voltage is less than or equal to a first threshold, send a first message to the power supply device, wherein the first threshold is determined based on a full-charge voltage of the to-be-charged device, and the first message comprises a current voltage of the to-be-charged device;
a receiving unit, configured to receive a second message from the power supply device in response to the first message, wherein the second message comprises a maximum output voltage of the power supply device; and
a request unit, configured to: when the maximum output voltage of the power supply device is greater than or equal to the full-charge voltage of the to-be-charged device, request to be charged in a first charging mode.

23. A power supply device, comprising:
a first sending unit, configured to send an insulation detection voltage to a to-be-charged device;
a receiving unit, configured to: when the insulation detection voltage is less than or equal to a first threshold, receive a first message sent by the to-be-charged device, wherein the first threshold is determined based on a full-charge voltage of the to-be-charged device, and the first message comprises a current voltage of the to-be-charged device;
a second sending unit, configured to send a second message to the to-be-charged device in response to the first message, wherein the second message comprises a maximum output voltage of the power supply device; and
a charging unit, configured to: when the maximum output voltage of the power supply device is greater than or equal to the full-charge voltage of the to-be-charged device, charge the to-be-charged device in a first charging mode.

24. A vehicle, comprising a to-be-charged device, wherein the to-be-charged device is configured to perform the method according to any one of claims 1 to 11.

25. A power supply device, wherein the power supply device is configured to perform the method according to any one of claims 12 to 21.

26. A charging system, comprising the to-be-charged device according to claim 24 and the power supply device according to claim 25, wherein the to-be-charged device is electrically connected to the power supply device, and the power supply device is configured to charge the to-be-charged device.

27. An electronic device, comprising a processor and a storage, wherein the storage is configured to store program code, and the processor is configured to invoke the program code in the storage, to enable the processor to perform the method according to any one of claims 1 to 21.

28. A computer program product, storing one or more computer execution instructions, wherein when the computer execution instructions are executed by a processor, the processor performs the method according to any one of claims 1 to 21.

29. A computer-readable storage medium, wherein the computer-readable storage medium stores a computer program, and when the computer program is executed by a processor, the method according to any one of claims 1 to 21 is implemented.
